Europäisches Patentamt

European Patent Office

Office européen des brevets

(11) Publication number: **0 218 476 B1**

## (12) EUROPEAN PATENT SPECIFICATION

(45) Date of publication of patent specification: **10.07.91**  (51) Int. Cl.⁵: **B30B 11/26, B30B 15/30**

(21) Application number: **86307608.9**

(22) Date of filing: **02.10.86**

(54) Apparatus for quantitatively extruding food material.

(30) Priority: **02.10.85 JP 219444/85**

(43) Date of publication of application:
**15.04.87 Bulletin 87/16**

(45) Publication of the grant of the patent:
**10.07.91 Bulletin 91/28**

(84) Designated Contracting States:
**AT BE CH DE FR GB IT LI NL SE**

(56) References cited:
| | |
|---|---|
| DE-A- 2 038 010 | DE-C- 284 166 |
| DE-C- 296 937 | DE-C- 443 005 |
| FR-A- 2 491 209 | US-A- 2 218 070 |
| US-A- 3 168 057 | US-A- 3 218 994 |
| US-A- 3 456 285 | |

(73) Proprietor: **RHEON AUTOMATIC MACHINERY CO. LTD.**
**2-3, Nozawa-machi**
**Utsunomiya-shi Tochigi-ken(JP)**

(72) Inventor: **Hayashi, Torahiko**
**3-4, Nozawa-machi**
**Utsunomiya-shi Tochigi-ken(JP)**
Inventor: **Tashiro, Yasunori**
**611-110, Yokoyama-cho**
**Utsunomiya-shi Tochigi-ken(JP)**

(74) Representative: **Boyes, Kenneth Aubrey et al**
**Frank B. Dehn & Co. Imperial House 15-19**
**Kingsway**
**London WC2B 6UZ(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to an apparatus for quantitatively extruding food material, and more particularly to an apparatus for quantitatively extruding a mixture of food materials, as for example, a vegetable salad or a fruit salad, which are mixtures of pieces of vegetables, fruit and/or meat that is not uniform in shape, and a dressing, into a bread, such as a croissant.

Japanese Patent Publication No. 39-21968 discloses an apparatus for quantitatively extruding paste material, in which two opposed rollers, each provided with a plurality of arcuate recesses on the peripheries thereof, are rotated step by step, each pair of opposing recesses forming at each step with an arcuate recess in the base of the apparatus a cylindrical space, whereby the paste material is enclosed in the space, and is then extruded by a piston.

In this apparatus the rollers can be rotated only after the piston is withdrawn, and moreover, it is necessary to introduce air into the temporarily formed cylindrical space to avoid the creation of a vacuum and to enable the piston to be smoothly retracted therefrom.

Along with the rotation of the rollers, the introduced air is brought into the hopper and is increasingly enclosed together with the food material in the cylindrical space, which leads to inaccurate measurements of the food material.

DE-A-2038010 discloses a machine for quantitatively filling sausages. Air is supplied to various parts of the machine to set it up for operation. Once the machine is actuated the piston is retracted and air enters the meat thrusting body to allow the pistons to move, pushing the meat out through openings. Meat contained in the hopper is forced into the chamber by a helical screwdrive mounted on a shaft, and a liner is rotated to receive the meat.

It is an object of this invention to provide an apparatus for quantitatively extruding food material such as vegetable salad, fruit salad, or paste materials containing liquid and solid food materials without the need to introduce air to the food material.

Thus according to the invention there is provided an apparatus for quantitatively extruding food material including a hopper having therein a chamber communicating with a first port and a second port for the chamber, the first and second ports being disposed opposite one another, a piston mounted to enter the first port, a nozzle mounted to communicate with the second port, at least one food material feeding means disposed in the hopper, means for driving the feeding means, cylindrical food material containing means comprising a substantially semi-cylindrical groove in the bottom surface of the hopper and an open-ended cylinder adapted to rotate slidably within the groove and provided with a longitudinally extending rectangular opening in the side wall thereof having a width approximately equal to the diameter of the cylinder and extending between said first and second ports, means to rotate the cylinder to form a cylindrical food material containing space defined by the remaining semicircular wall of the cylinder and said groove, or by juxtaposing the semicircular wall of the cylinder with the groove to define a food material receiving cavity, the front and rear open ends of the cylindrical space communicating with the first and second ports, respectively, and means for advancing the piston from the first port into said cylindrical space to extrude food material contained therein through said nozzle and for retracting the piston to allow food material fed by said food material feeding means to enter said cavity, characterized in that said food material feeding means comprises a driven roller disposed horizontally in the lower portion of the hopper, one side of said roller being spaced apart from and parallel to a side wall of the hopper, or to another driven roller, thereby forming a longitudinal space, the or each driven roller being provided with at least one protruding vane received slidably in at least one slot extending longitudinally of the driven roller and across the circular cross-section thereof, and said cylindrical food material containing means is disposed in said longitudinal space.

According to the present invention, driven material feeding means and a piston respectively are used to propel food material into and out of the cylindrical food material containing means. However, since the means defining the cylindrical food containing means are separate from and move independently of the feeding means, the piston, after extruding the food material, can be retracted while or even after the cylindrical food containing space is opened, whereby the food material to be extruded at the next stroke of the piston can enter the cylindrical space without the introduction of air.

Preferred embodiments of the invention will now be described, by way of example only, with reference to the accompanying drawings wherein:

Fig. 1 shows a schematic front elevational view in cross-section of a hopper of a first embodiment of the invention.

Fig. 2 shows a schematic side elevational view in partial cross-section of the apparatus of the first embodiment of the invention, the cross-section of the hopper and one of the driven rollers thereof being taken on the line A-A of Fig. 1, and the cross-section of other parts of the apparatus being taken on the line B-B of Fig. 1.

Fig. 3 shows a schematic front elevational view in cross-section of a hopper of second embodiment of the invention.

Fig. 4 shows a schematic front elevational view in cross-section of a hopper of a prior art apparatus.

Fig. 5 shows a schematic side elevational view in section of the prior art apparatus.

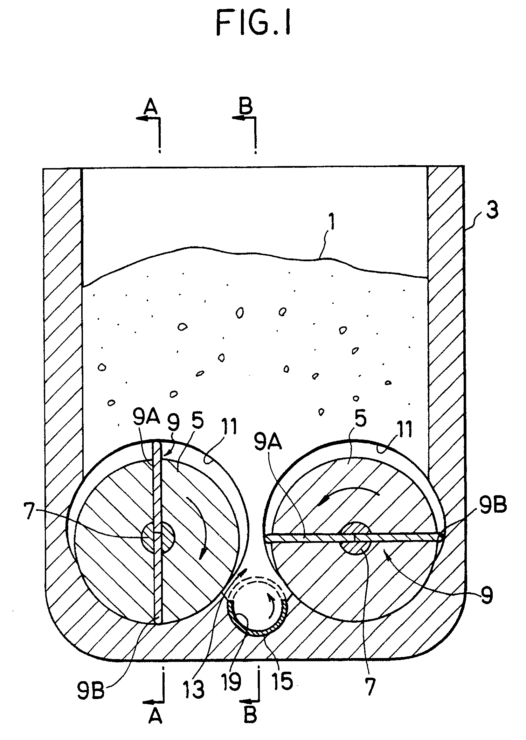

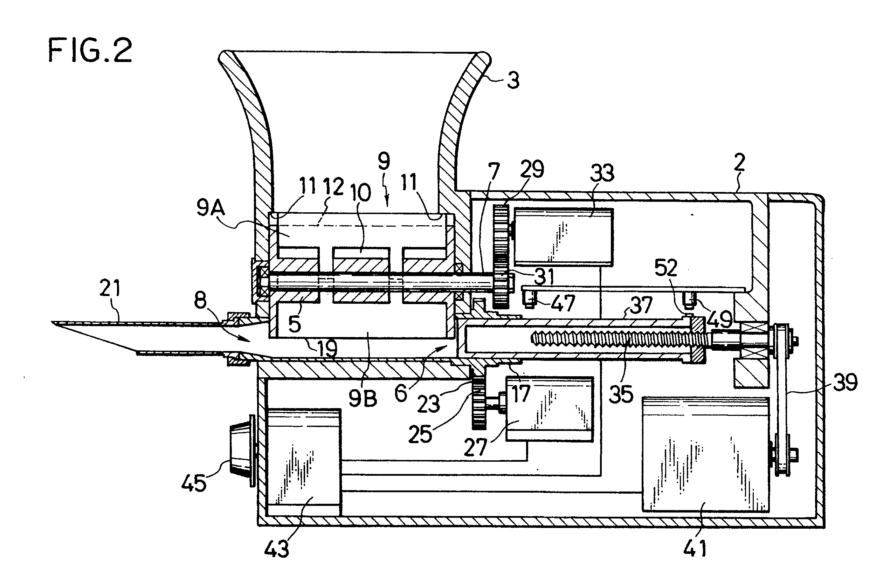

Referring now to Figs. 1 and 2 a hopper 3 is mounted on a housing 2 which accomodates related devices. Two driven rollers 5 are arranged horizontally in the lower portion of the hopper 3. A rectangular vane 9 of each roller is made from two stamped plates 9A, 9B.

As shown in Fig. 2, each of the stamped plates 9A, 9B is so shaped that two relatively smaller rectangular protrusions are formed perpendicularly to one longitudinal side thereof spaced apart from each other. The stamped plate 9A is connected to its mating plate 9B, at the ends of the protrusions to form the vane 9, and the vane 9 is placed in two slots provided in the shaft 7 and in the driven rollers 5. The vane 9 is slidably received in a slot 10, extending longitudinally of the roller 5 and diametrically across the circular cross-section thereof.

The rollers 5 are spaced apart from and parallel to each other and the side wall of the hopper 3, thereby forming a longitudinal space 13.

Each roller is mounted on a shaft 7, and a slot 10 is formed through the roller and the shaft to receive the vane 9 slidably. A dotted line 12 indicates the periphery of the roller 5 behind the vane 9. On the front and rear walls of the hopper 3, guides 11 are formed to provide cam surfaces to push one end of the vane 9, to thereby protrude the opposed end of the vane 9. A gear 31 is mounted on the shaft 7 near the rear end thereof.

A motor 33 is disposed in the housing 2, and its rotative force is transmitted through a gear 29 mounted on the shaft of the motor 33 and a gear 31 mounted on the shaft 7 of one of the driven rollers 5. The rotative force of the motor 33 is also transmitted through the gear 29, a gear (not shown) meshing with the gear 29, and a gear (not shown) meshing with the aforesaid gear and mounted on the shaft 7 of the other driven roller 5 (shown in Fig. 1). Thus the rollers 5 can be rotated in opposite directions, the roller on the right side in Fig. 1 rotating counterclockwise, while the other rotating clockwise, while making sliding contact with lower portions of the wall of the hopper 3. When each of the rollers 5 rotates, each of the vanes 9 protrudes or retracts under the action of cam guides 11 provided on the side walls of the hopper 3, whereby the vanes 9 feed the material 1 in the hopper 3 into the lower portion thereof. A cylindrical food material containing means comprises a longitudinal groove 15 and an open-ended cylinder 17. The longitudinal groove is provided in the longitudinal space between the two rollers and in the bottom surface of the hopper 3. The groove 15 is of a semicircular shape in cross-section and communicates with first and second ports 6 and 8, which are disposed opposite one another in the hopper 3.

The cylinder 17 extends between said ports and is arranged so as to slidably revolve within the groove 15. The cylinder 17 has an extension of the rear end thereof outside said hopper, on the periphery of which end extension a gear 23 is mounted. The cylinder 17 also has an extension at its front end, which engages with the second port 8. The cylinder 17 has on one side thereof a rectangular opening of a width approximately equal to the diameter of the cylinder and a length approximately equal to the length of the driven roller 5, leaving a semicircular wall 19. The cylinder 17 can be rotated by a motor 27 disposed in the housing 2, through a gear 25 mounted on the shaft of the motor 27 and meshing with the gear 23.

When the semicircular wall 19 is juxtaposed with and lies on the groove 15 face-to-face, the rectangular opening is directed upward, so that a cavity to receive the food material is formed. On the contrary, when the cylinder 17 revolves through about 180 degrees the semicircular wall and the groove 15 form a cylindrical space which communicates with the front and rear ports 6 and 8.

A piston 37 is of a cylindrical form and adapted to advance and retract through the cylinder 17, by means of a female screw provided at one end of the piston 37 and a threaded rod 35 meshing with the female screw and rotatably mounted on a frame of the housing 2. The rod 35 is rotated through a belt 39 by a motor 41 disposed in the housing 2. When the motor 41 is energized in the normal or reverse direction of rotation, the piston 37 advances or retracts within the cylinder 17, and within the cylindrical space.

Magnetic proximity switches 47 and 49 suspend from a horizontal rail provided on a portion of the housing 2, parallel to the piston 37, and are adapted for their mounting positions to be changed along the horizontal rail. These switches 47 and 49 sense the approach of a magnetic member 52 attached to the upper surface of the rear end of the piston 37, and transmit signals informing the approach of the magnetic member 52 to a control unit 43 provided in the housing 2. The unit, then, transmits a signal to the motor 41 to stop it. The switch 47 is used to stop the forward movement of the piston 37, and the switch 49 is used to stop the rearward movement of the piston. By changing the positions of the switches 47 and/or 49, the amount of the material 1 to be extruded can be varied.

The piston 37 is adapted to advance when the semicircular wall 19 and the groove 15 form the closed cylindrical space, and to retract while the cylinder 17 is rotated to open the cylindrical space. The relationship between the forward and backward movements of the piston 37 and the start and stop of its movement, and the revolution of the cylinder 17 are programmed in the control unit 43. The start and stop of the operation of the motors 27 and 41 are controlled by turning a knob 45. Also, a timer (not shown) to control the rotation of the motor 33 can be provided in the control unit, if necessary, and, in such case, the control of the motor 33 can be made by turning the knob 45. The motor 33 may be rotated to drive the driven rollers 5 independently of the movement of the cylinder 17, but the rotation of the motor 33 and the movement of the cylinder 17 can be advantageously related to each other. For instance, the driven roller 5 may be rotated 180°, 120°, or 90° while the cylinder 17 is rotated 360°. The relationship between the rotation of the driven roller 5 and the movement of the cylinder 17 is also programmed in the control unit 43.

The control of the rotation of the driven roller 5 is also possible by means of a plurality of magnetic members (not shown) attached at intervals to the side of the gear 31 along its circumference and a proximity switch (not shown) mounted, adjacent the gear 31, on the housing 2, whereby the proximity switch is adapted to emit signals to stop the motor 33.

The operation of the first embodiment of the invention will now be described. First, the knob 45 may be turned to select a desired condition to operate the apparatus. The food material 1 is then charged in the hopper 1 and accumulates over the driven rollers 5.

The characteristic of the food materials to be dealt with in the apparatus varies. For instance, the elasticity of a salad varies greatly depending on the elasticity of vegetables mixed into it. Therefore, if the amount of the food material to be placed in the cylindrical space is adjusted according to the elasticity of the material, the food material can be more precisely measured and the quality of the product is improved. Therefore, it is advisable to adjust the rotation angle of the driven rollers 5 for every cycle of the formation of the closed cylindrical space, leading to the intermittent rotation of the driven rollers 5.

The operator can also select, by turning the knob, a desired condition to operate the piston 37, such as whether the piston 37 begins to retract from its most advanced position when the rectangular opening begins to appear or when the opening has completely formed.

The accumulated food material is then introduced into the longitudinal space 13, while the driven rollers 5 rotate and the vanes 9 are made to protrude from the rollers 5 by the cams 11 which push the vanes 9. The vanes 9 propel the food material into the inside of the semicircular wall 19. After the food material fills the semicircular wall 19 and in the space in proximity thereto, the cylinder 17 is rotated to close the cylindrical space between the semicircular wall 19 and the longitudinal groove 15.

Vegetables and/or fruit parts overflowing the cylindrical space are cut away by the closing edge of the semicircular wall 19.

When the food material 1 is completely enclosed in the closed cylindrical space, the piston 37 extrudes the material. When the magnetic proximity switch 47 senses the magnetic member 52, it transmits a signal to inform the control unit 43 of the approach of the magnetic member 52, and the control unit 43 of the approach of the magnetic member 52, and the control unit 43 transmits a signal to stop the motor 41.

After the piston 37 extrudes the food material, the semicircular wall 19 begings to return to an open position at which the rectangular opening of the cylinder 17 is directed upwardly. The piston 37 can begin to be retracted at the beginning of the returning of the semicircular wall 19 to the open position, or may be retracted after the cylindrical space has completely opened.

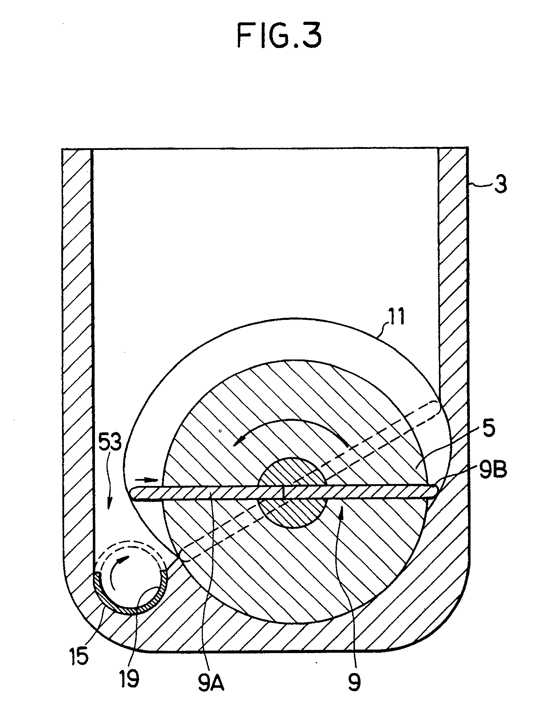

In a second embodiment of the invention, as shown in Fig. 3, a single driven roller 5 is provided. Once side of the roller 5 is spaced apart from and parallel to a side wall of the hopper 3 to form a longitudinal space 53, in which the cylindrical containing means comprising the longitudinal groove 15 and the semicircular wall 19 is provided. The roller 5 is arranged to rotate counterclockwise in Fig. 3 as indicated by an arrow. A vane 9 longer than the diameter of the roller 5 is inserted in a through slot formed in the roller 5 and made to engage a cam 11 formed on each of the front and rear end walls of the hopper 3. The cam 11 is configured so that an end of the vane 9 protrudes to propel the food material into the longitudinal space 53.

Also, the semicircular wall 19 is adapted to turn and to form a closed cylindrical space, enclosing the charged food material 1, which is then extruded by a piston 65 in a manner similar to that of the first embodiment.

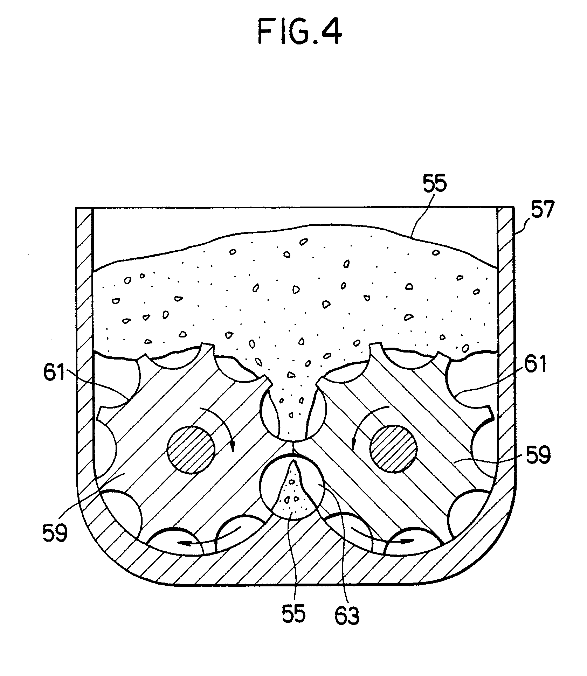

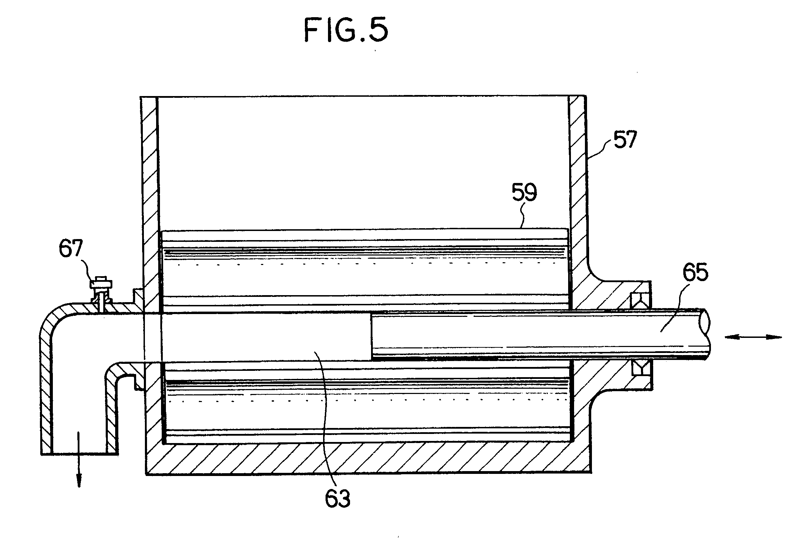

In Figs. 4 and 5, a prior art extruder is shown, in which two rollers 59 are arranged in a hopper 57 parallel to each other and adapted to rotate step by step in opposite directions as indicated by arrows shown in Fig. 4. Each roller 59 is provided, on the periphery thereof, with a plurality of arcuate recesses 61, and a pair of opposed recesses are synchronized to form a temporary closed cylindrical space 63 in cooperation with a portion of the bottom wall. The piston 65 is adapted to advance into the space 63 to extrude the food material inside the space 3 and then retract. During this cycle of the piston 65, the rollers 59, 59 stand still. After confirming the complete withdrawal of the piston 65, the rollers start to rotate. As will be understood from Fig. 4, paste material 55 cannot fill the space 63, and the piston 65 extrudes air as well as the material 55, which results in an inaccurate measurement of the material.

Air is introduced from a valve 67 to avoid creating a vacuum in the cylindrical space 63, which might be caused by the piston 65 being retracted while the cylindrical space remains closed.

Air thus introduced in the space 63 remains in the vicinity of the arcuate recesses 61, even after the space 63 is open when the rollers 59 are rotated, and a portion of air ascends, and the remainder is carried to the upper portion of the rollers 59 by the arcuate recesses along with the rotation of the rollers 59, as shown in Fig. 4.

Therefore, air around the rollers is in turn enclosed in the cylindrical space 63 together with the paste material 55.

On the contrary, in the apparatus according to the invention, the piston 37 can be retracted after the cylindrical space is opened, or while the cylinder 17 rotates to open the cylindrical space. As a result, no air is required to be introduced into the cylindrical space. Rather, the food material 1 can be introduced into the cylindrical space, even when the piston 37 is being retracted.

As aforesaid, since air is not mixed into the food material enclosed in the cylindrical space, accurate measurement of the food material can be accomplished by the apparatus of the invention.

Other characteristic features of the invention are as follows:

Since an assembly comprising a valve or a piston and cylinder assembly for sucking food material is not necessary for measuring the food material in the invention, any food material containing large solids can be quantitatively extruded.

By selecting the condition of rotation of the motor 33, for example, continuous rotation or intermittent rotation, the amount of the food material to be enclosed in the closed cylindrical space can be controlled in response to the elasticity of the food material deriving from the elastic characteristic of vegetables to be contained therein.

And, since the apparatus of the invention need not use a strong agitator to propel the food material into the cylindrical space, the food material can be extruded without destroying the fibrous tissue of the vegetable and/or fruit in the mixture, or without separating the juice from the vegetables and/or fruits.

## Claims

1. An apparatus for quantitatively extruding food material (1) including a hopper (3) having therein a chamber communicating with a first port (6) and a second port (8) for the chamber, the first and second ports (6,8) being disposed opposite one another, a piston (37) mounted to enter the first port (6), a nozzle (21) mounted to communicate with the second port (8), at least one food material feeding means disposed in the hopper, means for driving the feeding means, cylindrical food material containing means comprising a substantially semi-cylindrical groove (15) in the bottom surface of the hopper (3) and an open-ended cylinder (17) adapted to rotate slidably within the groove (15) and provided with a longitudinally extending rectangular opening in the side wall thereof having a width approximately equal to the diameter of the cylinder (17) and extending between said first and second ports (6,8), means (27,25,23) to rotate the cylinder (17) to form a cylindrical food material containing space defined by the remaining semicircular wall (19) of the cylinder (17) and said groove (15), or by juxtaposing the semicircular wall (19) of the cylinder (17) with the groove (15) to define a food material receiving cavity, the front and rear open ends of the cylindrical space communicating with the first and second ports (6,8), respectively, and means (41,39,35) for advancing the piston (37) from the first port (6) into said cylindrical space to extrude food material (1) contained therein through said nozzle (21) and for retracting the piston (37) to allow food material (1) fed by said food material feeding means to enter said cavity, characterized in that said food material feeding means comprises a driven roller (5) disposed horizontally in the lower portion of the hopper (3), one side of said roller (5) being spaced apart from and parallel to a side wall of the hopper (3), or to another driven roller (5), thereby forming a longitudinal space (13,53), the or each driven roller (5) being provided with at least one protruding vane (9) received slidably in at least one slot (10) extending longitudinally of the driven roller and across the circular cross-section thereof, and said cylindrical food material containing means is disposed in said longitudinal space.

2. An apparatus according to Claim 1 which further includes means (43) for regulating the rotation of the driven roller (5) or rollers (5,5).

## Revendications

1. Appareil pour extruder quantitativement une matière alimentaire (1) comprenant une trémie (3) renfermant une chambre communiquant avec un premier orifice (6) et un second orifice (8) pour la chambre, les premier et second orifices (6, 8) étant disposés de façon à être opposés l'un à l'autre, un piston (37) monté de façon à entrer dans le premier orifice (6), une buse (21) montée de façon à communiquer avec le second orifice (8), au moins un moyen d'alimentation en matière alimentaire disposé dans la trémie, des moyens destinés à entraîner le moyen d'alimentation, un moyen cylindrique contenant de la matière alimentaire comprenant une gorge sensiblement semi-cylindrique (15) dans la surface du fond de la trémie (3) et un cylindre (17), ouvert aux extrémités, conçu pour tourner de façon coulissante dans la gorge (15) et présentant, dans sa paroi latérale, une ouverture rectangulaire s'étendant longitudinalement, ayant une largeur approximativement égale au diamètre du cylindre (17) et s'étendant entre lesdits premier et second orifices (6, 8), des moyens (27, 25, 23) destinés à faire tourner le cylindre (17) pour former un espace cylindrique contenant de la matière alimentaire, défini par la paroi semi-circulaire restante (19) du cylindre (17) et ladite gorge (15), ou par juxtaposition de la paroi semi-circulaire (19) du cylindre (17) avec la gorge (15) pour définir une cavité de réception de matière alimentaire, les extrémités ouvertes avant et arrière de l'espace cylindrique communiquant avec les premier et second orifices (6, 8), respectivement, et des moyens (41, 39, 35) destinés à faire avancer le piston (37) du premier orifice (6) jusque dans ledit espace cylindrique pour extruder la matière alimentaire (1) qu'il contient à travers ladite buse (21) et pour rétracter le piston (37) afin de permettre à la matière alimentaire (1) amenée par ledit moyen d'alimentation en matière alimentaire d'entrer dans ladite cavité, caractérisé en ce que ledit moyen d'alimentation en matière alimentaire comprend un rouleau mené (5) disposé horizontalement dans la partie inférieure de la trémie (3), un côté dudit rouleau (5) étant espacé d'une paroi latérale de la trémie (3) et étant parallèle à cette paroi latérale de la trémie (3), ou à un autre rouleau mené (5), afin de former un espace longitudinal (13, 53), le ou chaque rouleau mené (5) étant pourvu d'au moins une palette (9) en saillie logée de façon coulissante dans au moins une fente (10) s'étendant longitudinalement au rouleau mené et à travers sa section transversale circulaire, et lesdits moyens cylindriques contenant la matière alimentaire sont disposés dans ledit espace longitudinal.

2. Appareil selon la revendication 1, qui comprend en outre un moyen (43) destiné à réguler la rotation du rouleau mené (5) ou des rouleaux menés (5, 5).

## Ansprüche

1. Vorrichtung zum quantitativen Extrudieren von Nahrungsmitteln (1) umfassend einen Trichter (3) mit einer darin befindlichen Kammer, die mit einer ersten Öffnung (6) und einer zweiten Öffnung (8) für die Kammer kommuniziert, wobei die erste und die zweite Öffnung (6, 8) einander gegenüberliegen, einen zum Eintritt in die erste Öffnung (6) montierten Kolben (37), eine zur Kommunikation mit der zweiten Öffnung (8) montierte Düse (21), mindestens eine im Trichter angeordnete Nahrungsmittelzuführung, Mittel zum Antreiben der Zuführung, zylindrische Nahrungsmittel-enthaltende Mittel mit einer im wesentlichen halb-zylindrischen Nut (15) in der Bodenfläche des Trichters (3) und einem Zylinder (17) mit offenen Enden, der zur gleitenden Drehung in der Nut (15) ausgelegt ist und mit einer in Längsrichtung verlaufenden rechteckigen Öffnung in seiner Seitenwand versehen ist, deren Breite etwa gleich dem Durchmesser des Zylinders (17) ist und die sich zwischen der ersten und der zweiten Öffnung (6, 8) erstreckt, und mit Mitteln (27, 25, 23) zum Drehen des Zylinders (17) zur Bildung eines zylindrischen Nahrungsmittel-enthaltenden Raumes, der durch die übrige halbkreisförmige Wand (19) des Zylinders (17) und die Nut (15) festgelegt ist, oder durch Anlegen der halbkreisförmigen Wand (19) des Zylinders (17) an die Nut (15) zur Festlegung eines Nahrungsmittelaufnehmenden Hohlraumes, wobei das vordere und das hintere offene Ende des zylindrischen Raumes mit der ersten bzw. mit der zweiten Öffnung (6, 8) kommunizieren, und mit Mitteln (41, 39, 35) zum Vorrücken des Kolbens (37) aus der ersten Öffnung (6) in den zylindrischen Raum zum Extrudieren von darin enthaltenem Nahrungsmittel (1) durch die Düse (21) und zum Zurückziehen des Kolbens (37), um ein Eintreten von von der Nahrungsmittelzuführung zugeführtem Nahrungsmittel (1) in den Hohlraum zu ermöglichen, dadurch gekennzeichnet, daß die Nahrungsmittelzuführung eine angetriebene Rolle (5) umfaßt, die horizontal im unteren Teil des Trichters (3) angeordnet ist, wobei eine Seite der Rolle (5) im Abstand von und parallel zu einer Seitenwand des Trichters (3) oder zu einer weiteren angetriebenen Rolle (5) verläuft, wodurch ein Längsraum (13, 53) gebildet wird, wobei die oder jede angetriebene Rolle (5) mit mindestens einem vorragenden Flügel (9) versehen ist, der gleitbar in mindestens einem Schlitz (10) aufgenommen ist, welcher sich in Längsrichtung der angetriebenen Rolle und quer über deren kreisförmigen Querschnitt erstreckt, und wobei das zylindrische Nahrungsmittel-enthaltende Mittel sich in diesem Längsraum befindet.

2.  Vorrichtung nach Anspruch 1, welches weiters Mittel (43) zur Regulierung der Drehung der angetriebenen Rolle (5) oder Rollen (5, 5) umfaßt.

# FIG.1

# FIG.2

# FIG.3

# FIG.4

# FIG.5

EP 0 218 476 B1